# EUROPEAN PATENT APPLICATION

(11) **EP 4 470 758 A1**
(43) Date of publication of application: **04.12.2024**
(21) Application number: 23747394.7
(22) Date of filing: 27.01.2023
(51) Int. Cl.: B29C 65/00, B65H 19/10, B65H 19/20, B29C 65/80, B29C 65/78, B29C 65/50

(54) **POUCH SUPPLY APPARATUS AND POUCH SUPPLY METHOD USING SAME**

(30) Priority: 28.01.2022 KR 20220013747; 26.01.2023 KR 20230010056
(71) Applicant: LG Energy Solution, Ltd., Seoul 07335 (KR)
(72) Inventor: CHOI, Won Seok, Daejeon 34122 (KR); LEE, Seung Bae, Daejeon 34122 (KR); BAEK, Ju Hwan, Daejeon 34122 (KR)
(74) Representative: Goddar, Heinz J.
(86) International application number: PCT/KR2023/001291
(87) International publication number: WO 2023/146353

(57) **Abstract**

An embodiment of the present invention provides a pouch supply apparatus for supplying a sheet-type pouch. The pouch supply apparatus includes a suction unit configured to suction an end of the pouch and unwind a portion of the pouch from a core so that a pouch roll, in which the pouch is wound around the core, is moved in an unwound state and a conveyance unit configured to convey the pouch roll at least during a state in which the pouch roll is unwound by the suction unit.

According to an embodiment of the present invention, it is possible to relieve an operator's workload by automatically replacing pouch rolls. Also, pouch rolls are automatically replaced, and thus, it is possible to minimize pouch supply interruption and maximize process efficiency.

## Description

### TECHNICAL FIELD

### CROSS-REFERENCE TO RELATED APPLICATION

The present application claims the benefit of the priority of Korean Patent Application Nos. 10-2022-0013747, filed on January 28, 2022, and 10-2023-0010056, filed on January 26, 2023, which are hereby incorporated by reference in their entirety.

### TECHNICAL FIELD

The present invention relates to a pouch supply apparatus and a pouch supply method using same.

### BACKGROUND ART

Coping with environmental pollution and depletion of petroleum resources, research and development on power generation on the basis of eco-friendly energy sources are being conducted. In particular, research on secondary batteries is being actively conducted, and research has been conducted on various aspects, such as materials, structures, processes, and systems of secondary batteries.

The secondary batteries go through various processes in a manufacturing process, and in general, the secondary batteries are produced through processes, such as an electrode process, an assembly process, and an activation process. Particularly in the assembly process among the above-described processes, smooth supply of a pouch is required, and thus, techniques for efficiently supplying the pouch have been proposed.

According to the related art, when the supply of an existing pouch of an existing pouch roll is completed and the pouch roll needs to be replaced, an operator manually replaces the pouch roll. In addition, according to the related art, when the pouch roll is replaced, the supply of the pouch is stopped, and then, the pouch roll is replaced.

### DISCLOSURE OF THE INVENTION

### TECHNICAL PROBLEM

An object of the present invention for solving the above problem is to provide a pouch supply apparatus capable of supplying pouches without interruption by automatically replacing pouch rolls and a pouch supply method using same.

### TECHNICAL SOLUTION

An embodiment of the present invention provides a pouch supply apparatus for supplying a sheet-type pouch. The pouch supply apparatus includes a suction unit configured to suction an end of the pouch and unwind a portion of the pouch from a core so that a pouch roll, in which the pouch is wound around the core, is moved in an unwound state and a conveyance unit configured to convey the pouch roll at least during a state in which the pouch roll is unwound by the suction unit.

An embodiment of the present invention provides a pouch supply method for supplying a sheet-type pouch. The pouch supply method includes unwinding a pouch roll in which a pouch is wound around a core, conveying the pouch roll to a preset connection position in a state in which the pouch roll is in an unwound state, and connecting a portion of the pouch of the pouch roll to an end of an existing pouch.

### ADVANTAGEOUS EFFECTS

According to an embodiment of the present invention, it is possible to relieve an operator's workload by automatically replacing pouch rolls.

According to an embodiment of the present invention, pouch rolls are automatically replaced, and thus, it is possible to minimize pouch supply interruption and maximize process efficiency.

### BRIEF DESCRIPTION OF THE DRAWINGS

FIG. 1 is a view showing a pouch supply apparatus according to an embodiment of the present invention.
FIG. 2 is a view showing a supply unit and a conveyance unit in the pouch supply apparatus according to an embodiment of the present invention.
FIGS. 3A to 3D are views showing the preparation for conveyance of a pouch roll in the pouch supply apparatus according to an embodiment of the present invention.
FIG. 4 is a view showing the conveyance of the pouch roll in the pouch supply apparatus according to an embodiment of the present invention.
FIGS. 5A and 5B are views showing the preparation for connection of pouch rolls in the pouch supply apparatus according to an embodiment of the present invention.
FIGS. 6A and 6B and FIGS. 7A and 7B are views showing the connection of pouch rolls in the pouch supply apparatus according to an embodiment of the present invention.
FIGS. 8A to 8C are views showing cutting of the pouch roll during connection of the pouch rolls in the pouch supply apparatus according to an embodiment of the present invention.
FIGS. 9A to 9C are views showing taping of pouch rolls in the pouch supply apparatus according to an embodiment of the present invention.

### MODE FOR CARRYING OUT THE INVENTION

Hereinafter, embodiments of the present invention are described in detail with reference to the accompanying drawings so as to be easily carried out by a person skilled in the art to which the present invention pertains. However, the present invention may be embodied in various different forms, and is neither limited nor restricted to the following embodiments.

In order to clearly describe the present invention, detailed descriptions of parts irrelevant to the invention or detailed descriptions of related well-known technologies that may unnecessarily obscure subject matters of the invention are omitted. In the specification, when reference numerals are given to components in each of the drawings, the same or similar components are designated by the same or similar reference numerals throughout the specification.

Also, terms or words used in the description and claims should not be restrictively interpreted as ordinary meanings or dictionary-based meanings, but should be interpreted as meanings and concepts conforming to the technical ideas of the present invention on the basis of the principle that an inventor can properly define the concept of a term so as to describe his or her invention in the best ways.

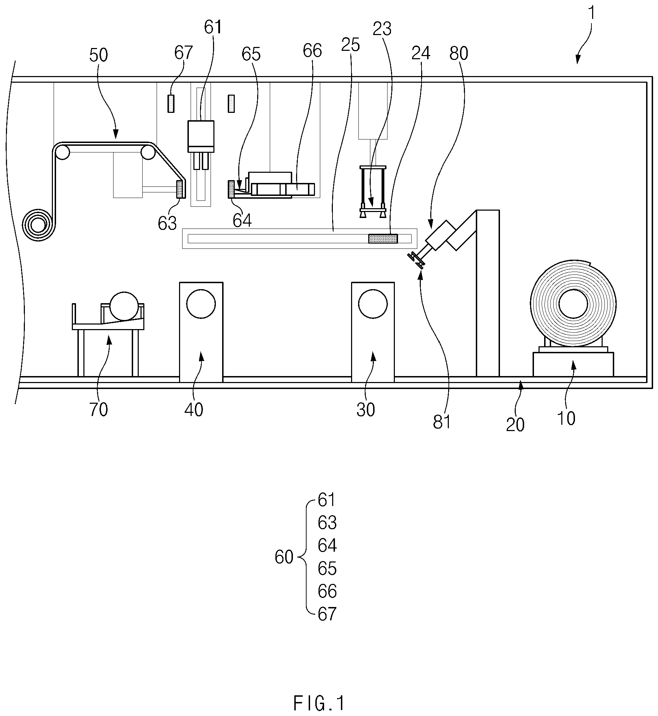

FIG. 1 is a view showing a pouch supply apparatus 1 according to an embodiment of the present invention.

The pouch supply apparatus 1 may include an apparatus provided to supply a sheet-type pouch to a subsequent process.

The pouch supply apparatus 1 may include a supply unit 10. For example, the supply unit 10 may receive a pouch roll 110 from the outside. The pouch roll 110 may be in a state in which a sheet-type pouch 130 is wound around a core 120. The core 120 may have a cylindrical shape including a cavity, but the embodiment is not limited thereto. In the pouch supply apparatus 1, the supply unit 10 may supply the pouch roll 110 to conveyance unit 20.

The pouch supply apparatus 1 may include the conveyance unit 20. The conveyance unit 20 may convey the pouch roll 110. For example, the conveyance unit 20 may convey the pouch roll 110 while supporting the pouch roll 110. The conveyance unit 20 may extend along a conveyance path of the pouch roll 110 (e.g., a path from a supply position to a connection position). The supply position may be a position at which the supply unit 10 receiving the pouch roll 110 is installed, and the connection position may be a preset position at which a support unit 40 described below is installed.

The pouch supply apparatus 1 may include a sub support unit 30. The sub support unit 30 may rotatably support the pouch roll 110. For example, the sub support unit 30 may rotatably support the pouch roll 110 at a standby position behind the connection position of the pouch roll 110. For a specific example, the sub support unit 30 may include a core support member 31 that is inserted into the core 120 of the pouch roll 110 and rotatably supports the pouch roll 110. The core support member 31 may be provided in the sub support unit 30 so as to be inserted into the core 120. In the sub support unit 30, the core support member 31 is inserted into the core 120 so that the pouch roll 110 may be rotatably supported, and the core support member 31 is removed from the core 120 so that support of the pouch roll 110 may be released. The standby position is a position at which the sub support unit 30 is installed, and may be a position between the supply position and the connection position.

The pouch supply apparatus 1 may include the support unit 40. For example, the support unit 40 may rotatably support the pouch roll 110 at the connection position at which the pouch 130 is connected to an existing pouch 51. For a specific example, the support unit 40 may include a core support member 41 that is inserted into the core 120 of the pouch roll 110 and rotatably supports the pouch roll 110. The core support member 41 may be provided in the sub support unit 40 so as to be inserted into the core 120. In the sub support unit 40, the core support member 41 is inserted into the core 120 so that the pouch roll 110 may be rotatably supported, and the core support member 41 is removed from the core 120 so that support of the pouch roll 110 may be released.

The pouch supply apparatus 1 may include a seating unit 50. The seating unit 50 may supply the sheet-type pouch to a subsequent process. For example, the seating unit 50 may include a plurality of rollers, and as the plurality of rollers rotate, the pouch seated on the plurality of rollers may be supplied to a subsequent process. For another example, the existing pouch 51 is seated on the seating unit 50 and supplied to a subsequent process, and then, the pouch 130 may be connected thereto before all of the existing pouch 51 is used. The seating unit 50 may supply the existing pouch 51 and the pouch 130, which are connected to each other, to a subsequent process. For example, as the plurality of rollers rotate, the existing pouch 51 and the pouch 130 seated on the plurality of rollers may be supplied to the subsequent process. However, the method of supplying the pouch to the subsequent process by the seating unit 50 may not be limited to the above description.

The pouch supply apparatus 1 may include a connection unit 60. The connection unit 60 may be provided to connect the existing pouch 51 and the pouch 130 to each other. For example, the connection unit 60 may connect the existing pouch 51 seated on the seating unit 50 to the pouch 130 of the pouch roll 110 supported by the support unit 40.

The pouch supply apparatus 1 may include a core collection unit 70. The core collection unit 70 may be provided to collect the core 120. For example, when all the pouch 130 is used and the support unit 40 releases the core 120 of the pouch roll 110, the core collection unit 70 may collect the core 120. The core collection unit 70 may move in a direction toward or away from the support unit 40.

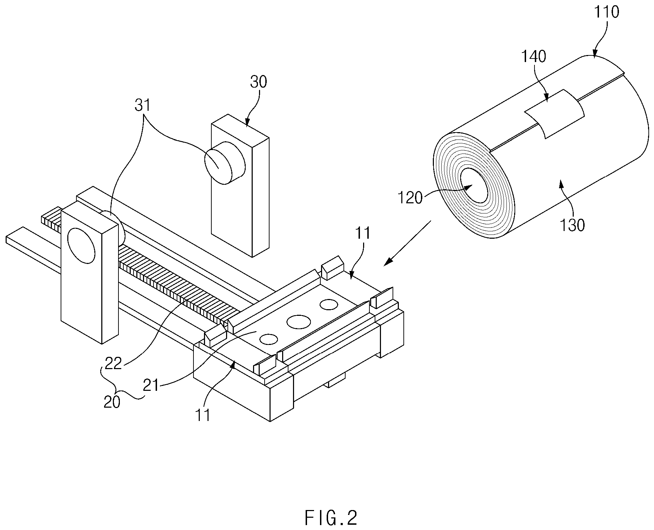

FIG. 2 shows the supply unit 10 and the conveyance unit 20 in the pouch supply apparatus 1 according to an embodiment of the present invention.

The supply unit 10 may be provided such that the pouch roll 110 is seated thereon. For example, the supply unit 10 may include supply standby parts 11. The supply standby parts 11 may be spaced a certain distance from each other and support both ends of the pouch roll 110. Both ends of the pouch roll 110 in which the pouch 130 is wound around the core 120 may be seated on the supply standby parts 11.

The conveyance unit 20 may include a roll support 21. For example, the roll support 21 may be installed at a position corresponding to the supply standby parts 11. When the pouch roll 110 is supplied and the pouch roll 110 is seated on the supply unit 10, the roll support 21 may support the pouch roll 110 together with the supply standby parts 11 from below. When the pouch roll 110 is conveyed, the roll support 21 may convey the pouch roll 110 while supporting the pouch roll 110 from below.

The conveyance unit 20 may include a first rail 22. For example, the first rail 22 may extend from a position at which the supply unit 10 is installed (e.g., the supply position) to a position at which the support unit 40 is installed (e.g., the connection position). The roll support 21 may be coupled to the first rail 22 so as to move between the supply unit 10 and the support unit 40 (or between the supply position and the connection position).

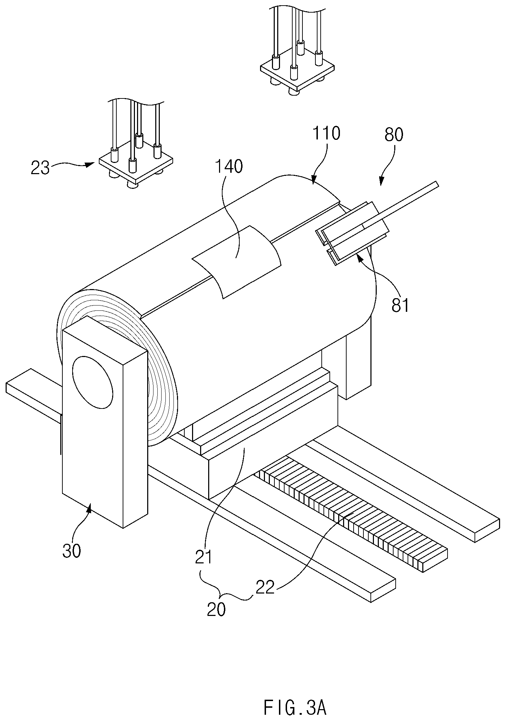

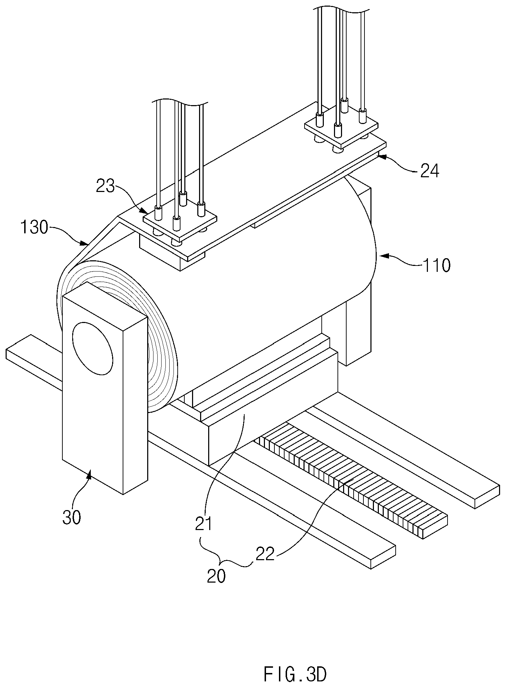

FIGS. 3A to 3D are views showing the preparation for conveyance of the pouch roll 110 in the pouch supply apparatus 1 according to an embodiment of the present invention.

Described with reference to FIG. 3A, the conveyance unit 20 may convey the pouch roll 110 from the supply position to the standby position (or the position where the sub support unit 30 is installed). For example, while the seating unit 50 supplies the existing pouch 51 of the existing pouch roll to a subsequent process, the conveyance unit 20 may convey the pouch roll 110 to the standby position at which the sub support unit 30 is installed. For a specific example, the pouch roll 110 may be moved, by the roll support 21, to the position at which the sub support unit 30 is installed (or the standby position).

The sub support unit 30 may support the pouch roll 110. For example, the sub support unit 30 may support the pouch roll 110 by inserting the core support member 31 into the core 120. The sub support unit 30 may rotate the pouch roll 110 by rotating the core support member 31. In more detail, the sub support unit 30 may be configured to be movable in parallel to the axial direction of the pouch roll 110, and the core support member 31 may be inserted into or separated from the core 120 according to movements of the sub support unit 30.

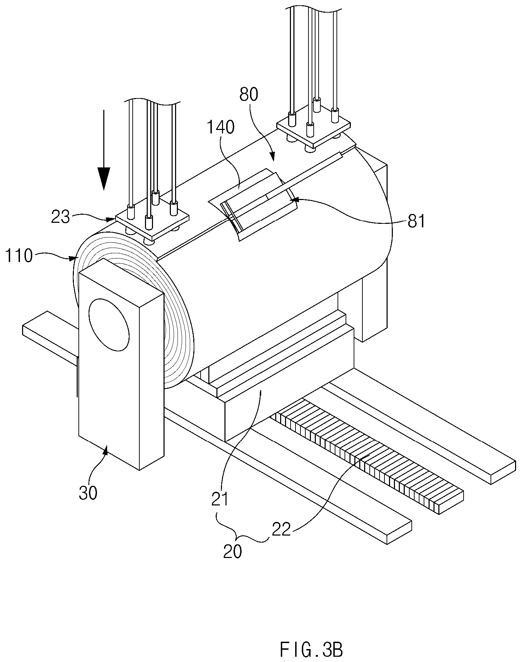

Described with reference to FIG. 3B, a restraining member 140 may be coupled to the pouch roll 110. For example, the restraining member 140 may be attached to the pouch roll 110 to prevent the loosening of the sheet-type pouch 130 wound around the core 120. The restraining member 140 may be attached to the pouch roll 110 to restrain an end of the pouch 130. For example, the restraining member 140 may include a tape attached to the end of the pouch 130.

The pouch supply apparatus 1 may include a peeling device 80. The peeling device 80 may be provided to remove the restraining member 140. For example, the peeling device 80 may include a peeling gripper 81. The peeling device 80 may grip the restraining member 140 attached to the pouch roll 110 using the peeling gripper 81, and may also peel off and remove the restraining member 140.

The peeling device 80 may be installed around a location in which the sub support unit 30 is installed (or the standby position). For example, the peeling device 80 may remove the restraining member 140 coupled to the pouch roll 110 while the pouch roll 110 is supported by the sub support unit 30 at the standby position. In this case, the sub support unit 30 may rotate the core support member 31 so that the restraining member 140 attached to the pouch roll 110 is at a position corresponding to the position of the peeling gripper 81. However, the embodiment is not limited thereto.

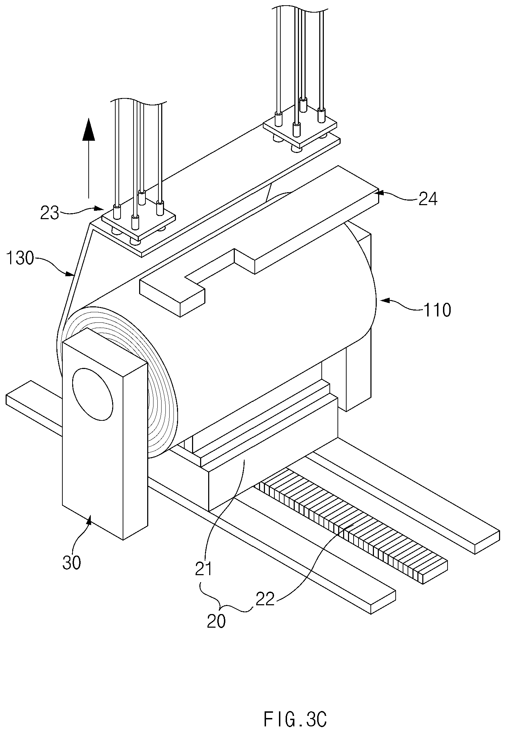

Described with reference to FIGS. 3C to 3D, the pouch supply apparatus 1 may include a suction unit 23. The suction unit 23 may partially unwind the pouch 130 from the core 120. For example, the suction unit 23 may suction the pouch 130 of the pouch roll 110 and unwind a portion of the pouch 130 from the core 120. For a specific example, the suction unit 23 may suction the end of the pouch 130 of the pouch roll 110, from which the restraining member 140 has been removed, and move (for example, move upward), and the pouch 130 may be partially unwound from the core 120.

The suction unit 23 may suction the pouch 130 within a certain time range on the basis of a time point at which the peeling device 80 removes the restraining member 140. For example, the suction unit 23 may be suctioning the pouch 130 before the peeling device 80 removes the restraining member 140. For another example, the suction unit 23 may suction the pouch 130 after the peeling device 80 removes the restraining member 140. For example, the suction unit 23 may suction the pouch 130 at the same time as the peeling device 80 removes the restraining member 140.

The conveyance unit 20 may include a seating pad 24. The seating pad 24 may be provided such that the end of the pouch 130 is seated thereon. For example, the suction unit 23 may suction the end of the pouch 130 and seat the suctioned end of the pouch 130 on the seating pad 24. The seating pad 24 may be provided to suction the end of the pouch 130 so that the seating is maintained. For example, the seating pad 24 may include a suction pad, and the end of the pouch 130 may be suctioned using the suction pad 24. An angle of the seating pad 24 may be adjusted so that the end of the pouch 130 is easily seated thereon.

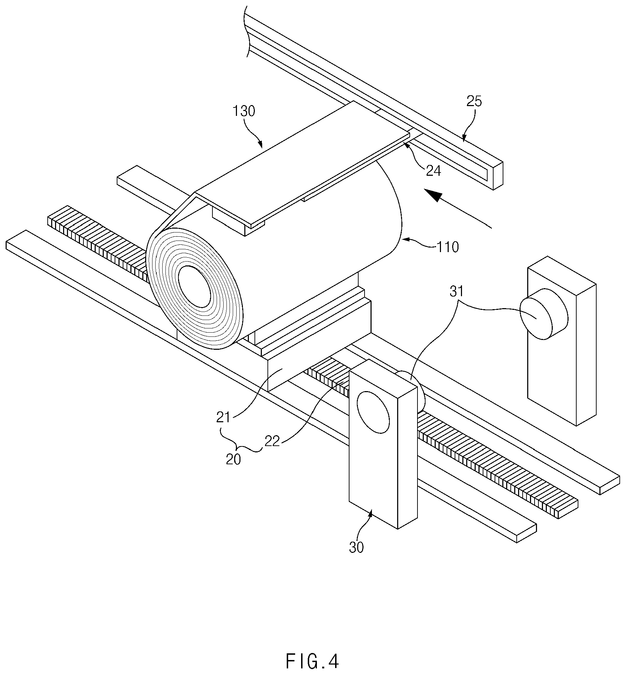

FIG. 4 is a view showing the conveyance of the pouch roll 110 in the pouch supply apparatus 1 according to an embodiment of the present invention.

The conveyance unit 20 may include a second rail 25. For example, the second rail 25 may extend from the standby position (or the position at which the sub support unit 30 is installed) to the connection position (or the position at which the support unit 40 is installed). For another example, the second rail 25 may be installed parallel to the first rail 22 so as to exhibit a movement direction parallel to that of the first rail 22. Also, the second rail 25 may be installed spaced apart from the first rail 22.

The seating pad 24 may be connected to the second rail 25. For example, the seating pad 24 may be coupled to the second rail 25 so as to be movable along the second rail 25.

The conveyance unit 20 may convey the pouch roll 110 to a position at which the support unit 40 is installed (or to the connection position). The conveyance unit 20 may convey the pouch roll 110 to the connection position using the roll support 21 and the first rail 22. For example, the roll support 21 may be conveyed to the connection position along the first rail 22 while supporting the pouch roll 110 from below. The seating pad 24 may be conveyed to the connection position along the second rail 25 in a state in which the end of the pouch 130 of the pouch roll 110 is suctioned thereby. The pouch roll 110 may be supported and suctioned by the roll support 21 and the seating pad 24 and conveyed to the connection position. In this case, the pouch roll 110 may be conveyed to the connection position in a partially unwound state.

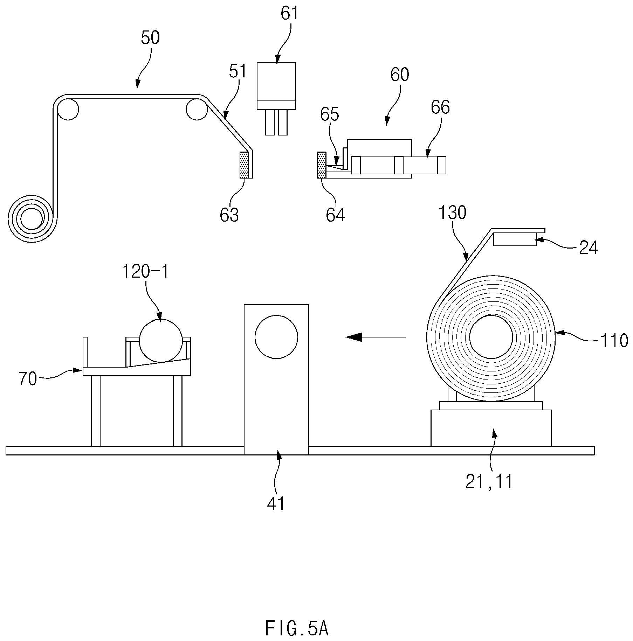

FIGS. 5A to 5B are views showing the preparation for connection of the pouch roll 110 in the pouch supply apparatus 1 according to an embodiment of the present invention.

The pouch supply apparatus 1 may include a core collection unit 70.

The core collection unit 70 may include a collection plate 71. For example, the collection plate 71 may have a stepped or inclined portion so that the core 120 may roll thereon. Also, the collection plate 71 may move relative to the support unit 40. In more detail, the collection plate 71 may be positioned on the opposite side of the pouch roll 110 from the support unit 40, and may move in the direction opposite to the direction, in which the conveyance unit 20 conveys the pouch roll 110, and approach the support unit 40. At the timing when the support unit 40 releases a core 120-1 to be collected, the collection plate 71 may move closer to the support unit 40. When the collected core 120-1 is accommodated in the collection plate 71, the collection plate 71 may be moved away from the support unit 40.

The core collection unit 70 may include a collection container (not shown). The collection container may be installed spaced apart from the support unit 40, and the collection plate 71 may be moved closer to the collection container when being far from the support part 40. When the collection plate 71 is moved closer to the collection container, the collected core 120-1 may be rolled and accommodated in the collection container.

When all the existing pouch 51 is used after supplying the existing pouch 51 using the existing pouch roll, the pouch supply apparatus 1 may remove the core support member 41 of the support unit 40, which supports the existing pouch roll, from the core 120-1. The collected core 120-1 may be dropped into the core collection unit 70 by gravity when the core support member 41 is removed therefrom.

Described with reference to FIG. 5A, the pouch supply apparatus 1 may convey the pouch roll 110 to the position, at which the support unit 40 is installed, (or to the connection position) by using the conveyance unit 20. For example, the conveyance unit 20 may convey the pouch roll 110 to the connection position using the roll support 21 and the first rail 22. For a specific example, the roll support 21 may convey the pouch roll 110 to the connection position along the first rail 22 while supporting the pouch roll 110 from below. The seating pad 24 may convey the pouch roll 110 to the connection position along the second rail 25 in a state in which the end of the pouch 130 of the pouch roll 110 is suctioned thereby. The pouch roll 110 may be supported and suctioned by the roll support 21 and the seating pad 24 and conveyed to the connection position. In this case, the pouch roll 110 may be conveyed to the connection position in a partially unwound state.

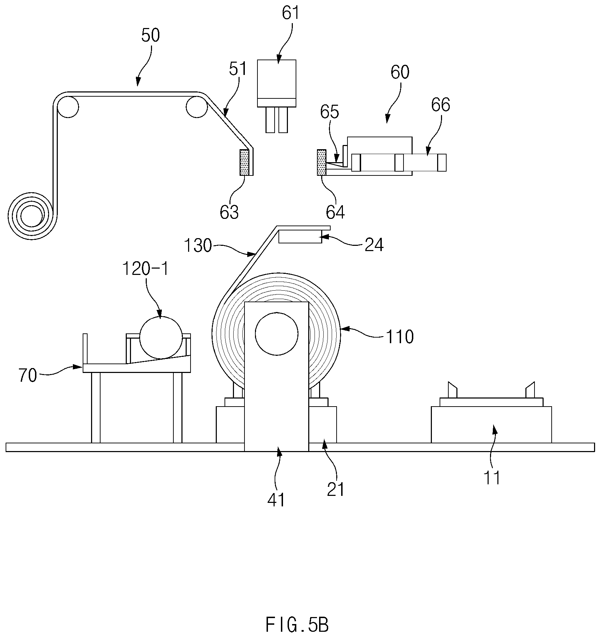

Described with reference to FIG. 5B, the support unit 40 may support the pouch roll 110. For example, the support unit 40 may insert the core support member 41 into the core 120 of the pouch roll 110 when the pouch roll 110 is conveyed to the connection position. The support unit 40 may insert the core support member 41 into the core 120 and rotatably support the pouch roll 110 at the connection position. In more detail, the support unit 40 may be configured to be movable in parallel to the axial direction of the pouch roll 110, and the core support member 41 may be inserted into or separated from the core 120 according to movements of the support unit 40.

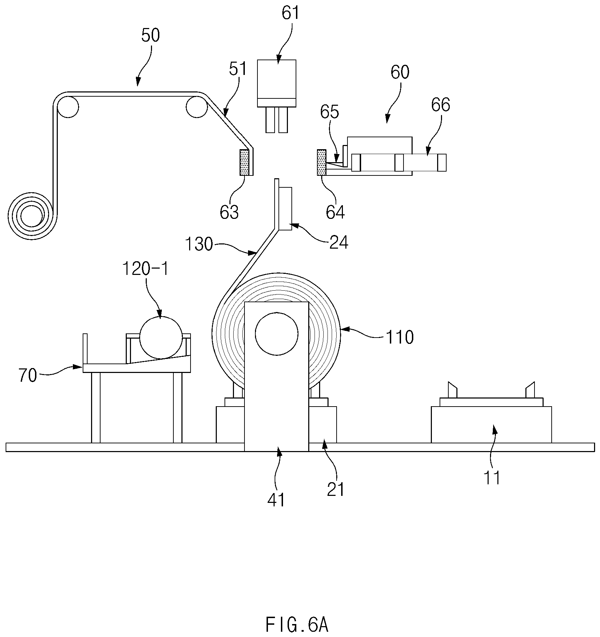

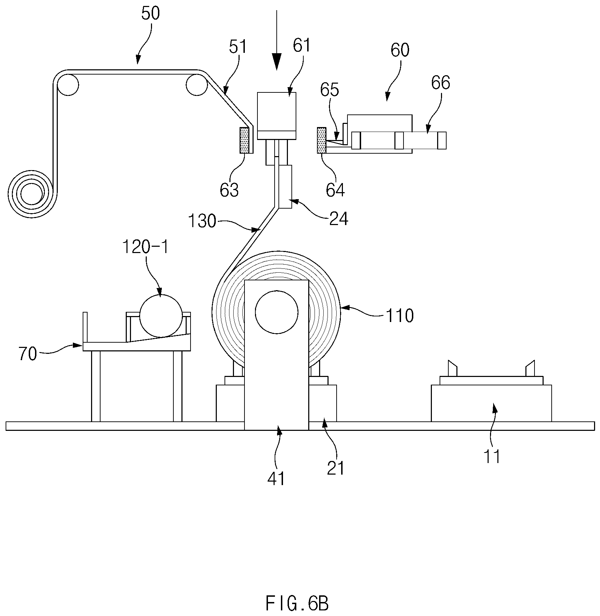

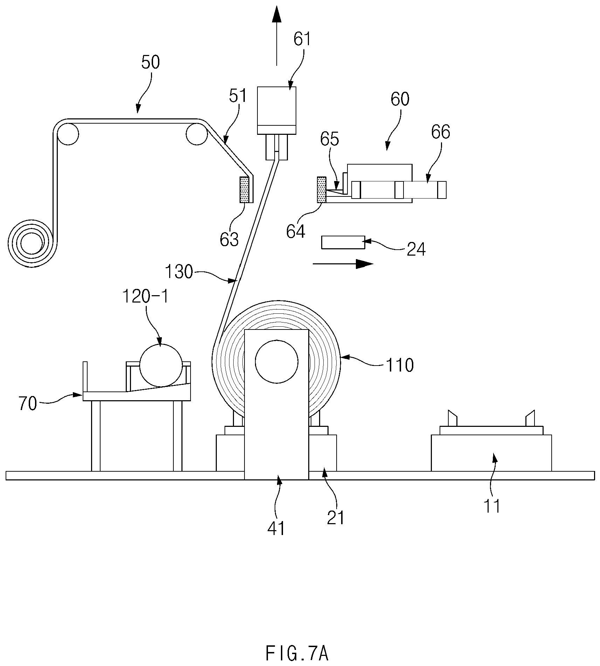

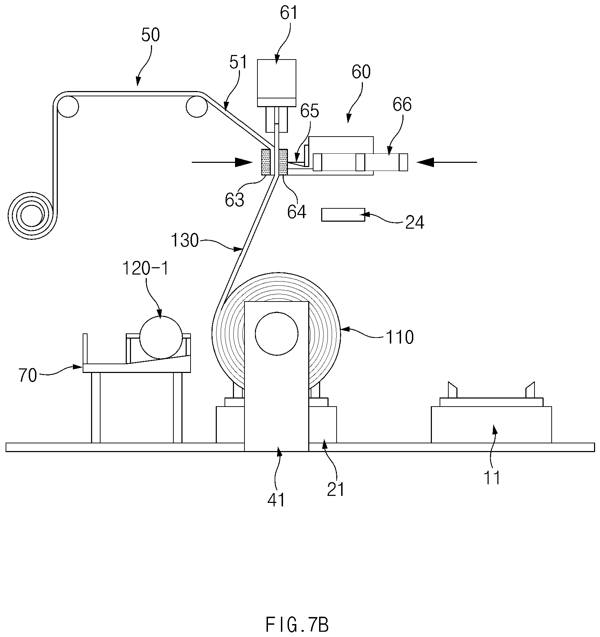

FIGS. 6A and 6B and FIGS. 7A and 7B are views showing the connection of the pouch roll 110 in the pouch supply apparatus 1 according to an embodiment of the present invention.

Described with reference to FIG. 6A, the angle of the seating pad 24 may be adjusted such that the end of the pouch 130 is oriented in the up-down direction. For example, in order for a gripper 61 to easily grip a portion of the pouch 130, the angle of the seating pad 24 may be adjusted such that the end of the pouch 130 is oriented in the up-down direction.

Described with reference to FIG. 6B, the connection unit 60 may include the gripper 61. The gripper 61 may move while gripping the pouch 130. For example, the gripper 61 may be coupled to a separate rail so as to be vertically movable relative to the support unit 40. The gripper 61 may grip a portion of the pouch 130 and move the portion of the pouch 130 to a position corresponding to an end of the existing pouch 51.

The connection unit 60 may include a connection operating part 62. The connection operating part 62 may connect the pouch 130 to the existing pouch 51. For example, the connection operating part 62 may perform compression, cutting, and taping on both the existing pouch 51 and the pouch 130.

Described with reference to FIGS. 7A and 7B, the connection operating part 62 may compress both the existing pouch 51 and the pouch 130.

The gripper 61 may grip the portion of the pouch 130 and move the portion of the pouch 130 to a position corresponding to the end of the existing pouch 51. Also, the gripper 61 may grip a portion of the pouch 130 and move the portion of the pouch 130 between a first compression portion 63 and a second compression portion 64 which are described below.

The connection operating part 62 may include the first compression portion 63 and the second compression portion 64. For example, the first compression portion 63 and the second compression portion 64 may be installed at positions corresponding to each other (or at positions facing each other).

Also, the first compression portion 63 and the second compression portion 64 may be installed at positions corresponding to the end of the existing pouch 51. For example, the end of the existing pouch 51 may hang downward from the seating unit 50. The first compression portion 63 may be positioned below the seating unit 50 and installed to face the end of the existing pouch 51 that hangs downward. In this case, the second compression portion 64 may be installed to face the first compression portion 63 with the end of the existing pouch 51 therebetween.

The end of the existing pouch 51 may be formed by being cut by a cutting part 65 described below, and the cutting part 65 described below may be installed at a position corresponding to the position of the second compression portion 64. The connection operating part 62 may compress both the existing pouch 51 and the pouch 130 by using the first compression portion 63 and the second compression portion 64.

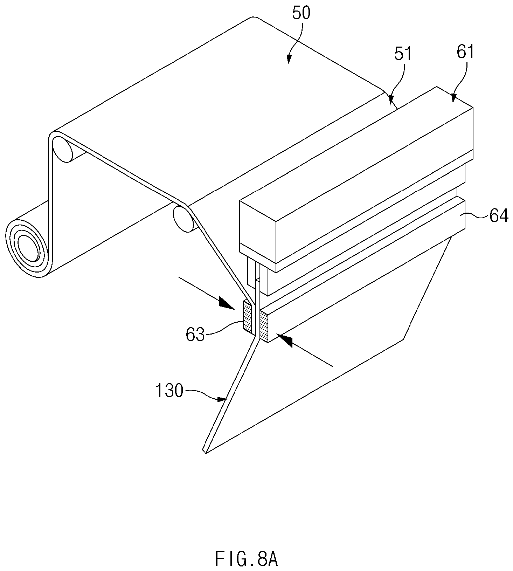

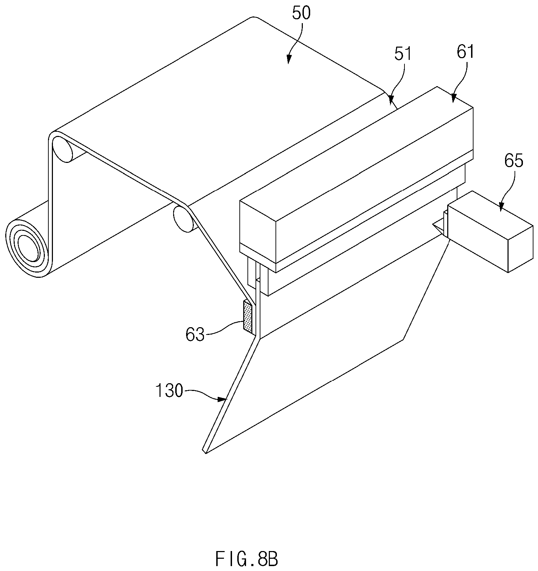

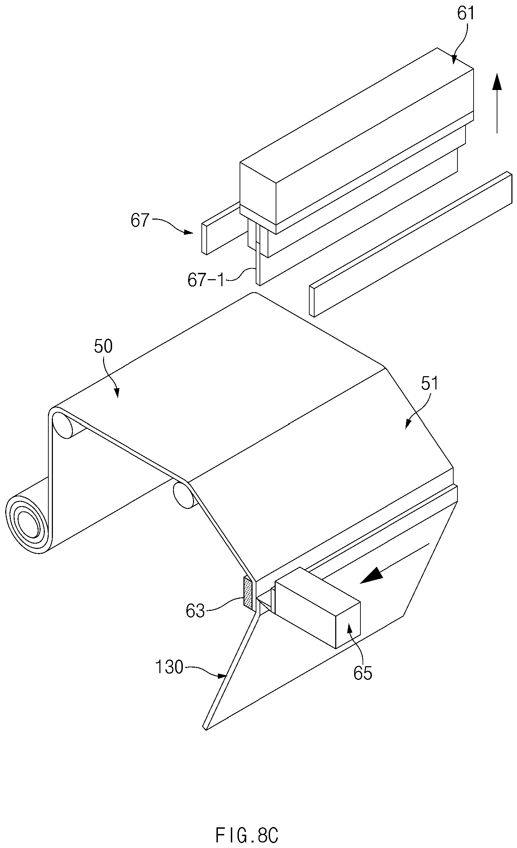

FIGS. 8A to 8C are views showing cutting of the pouch roll 110 during the connection thereof in the pouch supply apparatus 1 according to an embodiment of the present invention.

Described with reference to FIGS. 8A to 8C, the connection operating part 62 may include the cutting part 65. The cutting part 65 may cut the pouch 130 in a state in which the gripper 61 grips a portion (e.g., a distal end) of the pouch 130. For example, the cutting part 65 may cut a portion (or an end) of the pouch 130 in a state in which the existing pouch 51 and the pouch 130 are compressed by the first compression portion 63 and the second compression portion 64. In this case, the second compression portion 64 may include a region formed along a cutting path of the cutting part 65 so that a cutting blade may pass through the region. Also, the second compression portion 64 forms a height difference with the first compression portion 63, and the cutting part 65 may cut a portion (or an end) of the pouch 130 using the space that is formed by the height difference. Also, in a state in which the existing pouch 51 and the pouch 130 are attached (or temporarily attached) to each other by the first compression portion 63 and the second compression portion 64, the position of the second compression portion 64 may be moved, and the cutting part 65 may be moved closer to the pouch 130 to perform cutting. The description of the first compression portion 63 and the second compression portion 64 described above is an example, and the embodiment may not be limited thereto.

The connection operating part 62 may include a cut pouch disposal part 67. The cut pouch disposal part 67 may be provided to dispose of a portion cut from the pouch 130. For example, when the cutting part 65 cuts a portion of the pouch 130, the pouch 130 may be divided into a portion gripped by the gripper 61 and a remaining portion (e.g., a portion extending from the compressed region together with the existing pouch 51 to the pouch roll 110). The cut pouch disposal part 67 may suction the portion gripped by the gripper 61 (e.g., the end of the pouch 130 or a cut pouch 67-1) and move the same to another place for disposal.

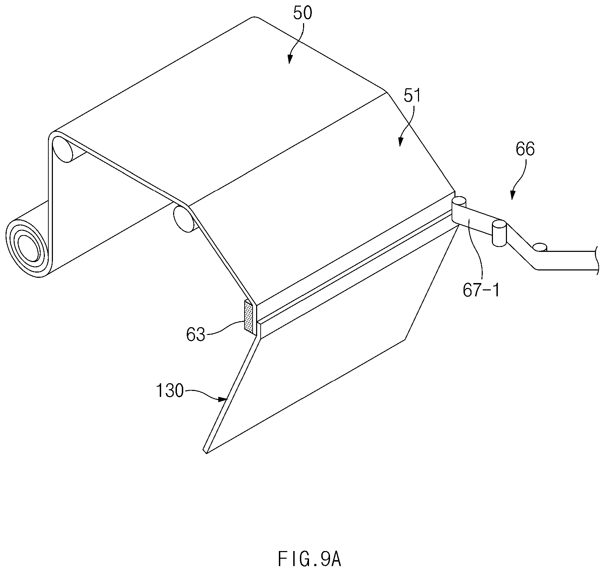

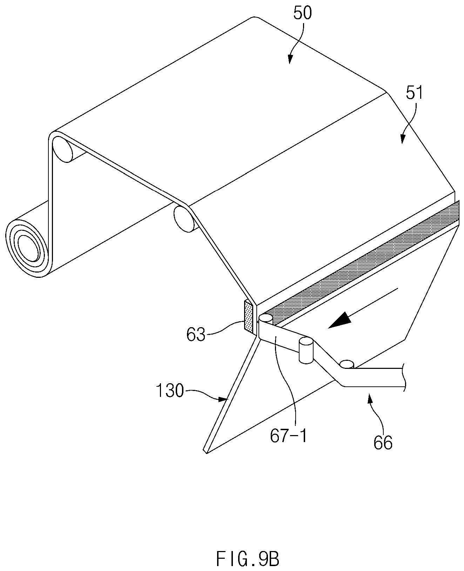

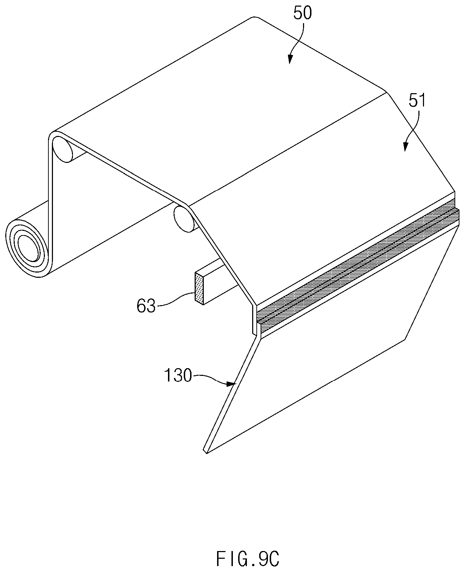

FIGS. 9A to 9C are views showing taping of the pouch roll 110 in the pouch supply apparatus 1 according to an embodiment of the present invention.

Described with reference to FIGS. 9A to 9C, the connection operating part 62 may include a taping part 66. The taping part 66 may perform taping on a cutting path along which the cutting part 65 cuts the pouch 130. For example, when the cutting part 65 cuts a portion of the pouch 130, the pouch 130 may be divided into a cut pouch 67-1 (or a portion gripped by the gripper 61) and a remaining portion (e.g., a portion extending from the compressed region together with the existing pouch 51 to the pouch roll 110). The taping part 66 may perform taping, by using a connection tape 66-1, so as to cover the cutting path and a portion of each of the remaining portion of the pouch 130 and the existing pouch 51. When the taping part 66 performs taping, the existing pouch 51 and the pouch 130 may be connected to each other.

The taping part 66 may be installed at a position corresponding to the second compression portion 64. Also, in a state in which the existing pouch 51 and the pouch 130 are attached (or temporarily attached) to each other by the first compression portion 63 and the second compression portion 64, the cutting may be performed by the cutting part 65, the position of the second compression portion 64 may be moved, the taping part 66 may be moved closer to the pouch 130, and the taping part 66 may perform the taping thereon. The description of the taping part 66 described above is an example, and the embodiment may not be limited thereto.

Although the present invention is described by specific embodiments and drawings, the present invention is not limited thereto, and various changes and modifications may be made by a person skilled in the art to which the present invention pertains within the technical idea of the present invention and equivalent scope of the appended claims.

### [Description of the Symbols]

1: Pouch supply apparatus
10: Supply unit
11: Supply standby part
20: Conveyance unit
21: Roll support
22: First rail
23: Suction unit
24: Seating pad
25: Second rail
30: Sub support unit
31: Core support member
40: Support unit
41: Core support member
50: Seating unit
51: Existing pouch
60: Connection unit
61: Gripper
62: Connection operating part
63: First compression portion
64: Second compression portion
65: Cutting part
66: Taping part
66-1: Connection tape
67: cut pouch disposal part
67-1 Cut pouch
70: Core collection unit
71: Collection plate
80: Peeling device
81: Peeling gripper
110: Pouch roll
120: Core
120-1: Collected core
130: Pouch
140: Restraining member

## Claims

1. A pouch supply apparatus for supplying a sheet-type pouch, the pouch supply apparatus comprising:
a suction unit configured to suction an end of the pouch and unwind a portion of the pouch from a core so that a pouch roll, in which the pouch is wound around the core, is moved in an unwound state; and
a conveyance unit configured to convey the pouch roll at least during a state in which the pouch roll is unwound by the suction unit.

2. The pouch supply apparatus of claim 1, further comprising:
a support unit configured to rotatably support the core when the pouch roll is conveyed to a connection position by the conveyance unit;
a seating unit on which an existing pouch is seated; and
a connection unit configured to unwind a portion of the pouch from the core and connect the portion of the pouch to an end of the existing pouch when the core is connected to the support unit.

3. The pouch supply apparatus of claim 2, further comprising a core collection unit located at a position corresponding to the support unit so that an existing core, from which the existing pouch is unwound, is collected.

4. The pouch supply apparatus of claim 3, wherein the core collection unit comprises:
a collection plate having a stepped or inclined portion; and
a collection container in which the core dropping from the collection plate is stored.

5. The pouch supply apparatus of claim 2, further comprising a sub support unit configured to rotatably support the core when the pouch roll is in a standby position behind the connection position.

6. The pouch supply apparatus of claim 1, wherein the conveyance unit comprises:
a first rail; and
a roll support that supports the pouch roll from below and moves along the first rail.

7. The pouch supply apparatus of claim 6, wherein the conveyance unit further comprises:
a second rail spaced apart from the first rail; and
a seating pad which moves along the second rail and on which the portion of the pouch unwound by the suction unit is seated.

8. The pouch supply apparatus of claim 7, wherein the seating pad comprises a suction pad.

9. The pouch supply apparatus of claim 2, wherein the support unit comprises a core fixing member which is inserted into or removed from the core that is positioned in the connection position.

10. The pouch supply apparatus of claim 2, wherein the connection unit comprises:
a gripper which grips a portion of the pouch and moves the portion of the pouch to a position corresponding to the end of the existing pouch; and
a connection operating part configured to connect the portion of the pouch to the end of the existing pouch.

11. The pouch supply apparatus of claim 10, wherein the connection operating part comprises:
a first compression portion which is positioned below the seating unit and faces the end of the existing pouch that hangs downward; and
a second compression portion which faces the first compression portion with the end of the existing pouch therebetween,
wherein the gripper moves the portion of the pouch between the first compression portion and the second compression portion.

12. The pouch supply apparatus of claim 10, wherein the connection operating part further comprises:
a cutter configured to cut a distal end of the pouch; and
a cut pouch disposal part configured to collect the distal end of the pouch that has been cut by the cutter.

13. The pouch supply apparatus of claim 10, wherein the connection operating part comprises a taping part configured to perform taping so that the existing pouch and the pouch are connected to each other.

14. The pouch supply apparatus of claim 1, further comprising a peeling device that peels off a restraining member, which restrains the end of the pouch, so that the pouch roll is unwound,
wherein the suction unit suctions the end of the pouch within a certain time range on the basis of a time point at which the peeling device removes the restraining member.

15. The pouch supply apparatus of claim 1, further comprising a seating pad on which the end of the pouch is seated so that the pouch roll is maintained in an unwound state by the suction unit, wherein an angle of the seating pad is adjustable.

16. A pouch supply method for supplying a sheet-type pouch, the pouch supply method comprising:
unwinding a pouch roll in which a pouch is wound around a core;
conveying the pouch roll to a preset connection position in a state in which the pouch roll is in an unwound state; and
connecting a portion of the pouch of the pouch roll to an end of an existing pouch.

17. The pouch supply method of claim 16, further comprising moving the existing pouch and the pouch connected to the existing pouch to a subsequent process.

18. The pouch supply method of claim 16, further comprising, prior to the conveying of the pouch roll to the preset connection position:
peeling off a restraining member, which restrains the end of the pouch, by using a peeling device so that the pouch roll is unwound; and
unwinding a portion of the pouch from the core by using a suction unit so that the portion of the pouch is seated on a seating pad.

19. The pouch supply method of claim 18, wherein, during the conveying of the pouch roll to the preset connection position,
a roll support for supporting the pouch roll from below moves to the connection position along a first rail, and
the seating pad moves to the connection position along a second rail that is spaced apart from and parallel to the first rail.

20. The pouch supply method of claim 16, wherein the connecting of the portion of the pouch of the pouch roll to the end of the existing pouch comprises:
gripping the portion of the pouch with a gripper and moving the portion of the pouch to a position corresponding to the end of the existing pouch;
compressing the end of the existing pouch and the portion of the pouch from both sides by using compression portions; and
performing taping by using a taping part so that the end of the existing pouch and the portion of the pouch are connected to each other.
